# EUROPEAN PATENT SPECIFICATION

(11) **EP 2 831 211 B1**
(45) Date of publication and mention of the grant of the patent: **18.05.2016**
(21) Application number: 13711251.2
(22) Date of filing: 12.03.2013
(51) Int. Cl.: C10M 159/24, C10N 30/06, C10N 40/04

(54) **METHOD OF LUBRICATING A MANUAL TRANSMISSION WITH IMPROVED SYNCHROMESH PERFORMANCE**
VERFAHREN ZUM SCHMIEREN VON HANDSCHALTGETRIEBEN MIT VERBESSERTER SYNCHRONGETRIEBELEISTUNG
METHODE DE LUBRIFICATION DE BOÎTE DE VITESSES MANUELLE AYANT UNE PERFORMANCE DE SYNCHRONISEUR AMÉLIORÉE

(30) Priority: 26.03.2012 US 201261615437 P
(43) Date of publication of application: 04.02.2015
(73) Proprietor: The Lubrizol Corporation, Wickliffe, OH 44092-2298 (US)
(72) Inventor: WALKER, Gary M., Belper Derby DE56 1QN (GB); FRIEND, Christopher L., Wickliffe, Ohio 44092-2298 (US); BROWN, Gareth, Belper Derby DE56 1QN (GB); SEDDON J., Elisa, Wickliffe, Ohio 44092-2298 (US); HUSTON, Michael E., Wickliffe, Ohio 44092-2298 (US)
(74) Representative: D Young & Co LLP
(86) International application number: PCT/US2013/030313
(87) International publication number: WO 2013/148146

(56) References cited:
- WO-A1-2012/030590
- US-A- 5 635 459
- US-A1- 2003 104 952

## Description

### BACKGROUND OF THE INVENTION

The present invention relates to lubricants for manual transmissions with improved performance with non-metal synchromesh components. Problems occur with synchromesh parts in a manual transmission with many oils delivering a non-optimal friction or which give rise to high wear of the components leading to synchromesh damage and poor or failed gear shifts.

The synchronizer is one of the more important components of any manual gearbox. Increasing performance, reducing shift force and minimizing the between-the-gears energy losses are the primary objectives for a new generation of synchronizer systems. Improvements in the capacity of the mechanical system and the introduction of various synchronizers of various designs and materials are allowing economical reengineering of existing synchronizer designs into more efficient designs. The lubricants or additives for manual transmission lubricating oils needs to be reformulated for these designs to be able to maintain adequate friction between the interacting parts of the synchronizer and to protect these parts from wear.

Conventional gear oils or manual transmission oils typically contain chemical components, such as active sulfur and surface-active amine organophosphates. While excellent as additives to provide extreme pressure lubrication, in the usual amounts these additives alone are typically too slippery, that is, they may not provide the desired or optimal frictional response, and do not adequately protect the lubricated surfaces from abrasive or corrosive wear.

U.S. Patent 6,503,872, Tomaro, January 7, 2003, discloses extended drain manual transmission lubricants which contain at least one basic alkali or alkaline earth metal salt of an acidic organic compound. The overbased material generally have a total base number up to about 600 or about 500, or about 400. In Example 1, a manual transmission lubricant is prepared by blending into a manual transmission base stock, 1.2 parts of the Example A-6 [a metal dithiophosphate] with 0.4 parts of an oil solution of an overbased magnesium sulfonate (42% diluent oil, metal ratio 14.7, 9.4% magnesium, and 400 total base number) to form an intermediate, to this intermediate is added 0.5 parts of dibutyl phosphite. In other examples, a calcium sulfurized phenate (38% diluent oil, 255 total base number) is also present.

PCT publication WO 1987/05927, October 8, 1987, discloses manual transmission fluids comprising, among other components, a selected alkaline earth metal salt. In Example IV, a manual transmission fluid is prepared by combining, with other ingredients, 3.5 parts calcium alkyl benzene sulfonate (overbased) wherein the alkyl contains about 24 carbon atoms on average. In a description of overbased salts, it states that typically, the excess alkaline earth metal will be present over that which is required to neutralize the anion at about 10:1 to 30:1, preferably 11:1 to 18:1 on an equivalent basis.

U.S. Patent 6,617,287, Gahagan, September 9, 2003, discloses manual transmission lubricants with improved synchromesh performance. Problems of wear and too low friction for a manual transmission with sintered metal parts in the synchronizer are said to be solved by using a lubricating oil formulated with a high level of an alkaline earth sulfonate in combination with amine phosphates. Preferred metal salts are magnesium or calcium, more preferably magnesium. The overbased materials generally have a total base number from about 20 to about 700, preferably from about 100 to about 600, and more preferably from about 250 to about 500. In examples, there is employed an overbased magnesium alkylbenzenesulfonate with a TBN of 400 and containing about 32% mineral oil diluent.

U.S. Patent Publication 2008/0119378, Gandon et al., May 22, 2008, discloses functional fluids comprising alkyl toluene sulfonates as friction modifying agents. The fluids may be tractor fluids, transmission fluids, or hydraulic fluids. The alkyl toluene sulfonate salts may be either neutral or overbased salts, and they may be highly overbased to have a TBN of between about 50 to about 400, or about 280 to about 350, or about 320.

European Patent Application EP 0 552 863, July 28, 1993, discloses high-sulfur mineral oil compositions and reducing the copper corrosivity of mineral oils having a high content of sulfur compounds. Example 1 discloses an additive concentrate containing, among other components, 1.33% of an overbased calcium sulfurized phenate, indicted to have a TBN of 254, and 1.33% calcium dinonylnaphthalene sulfonate as a 50% solution in light mineral oil. The lubricating oil compositions can be used in a variety of applications such as automotive crankcase lubricating oils, automatic transmission fluids, gear oils, hydraulic oils, or cutting oils. The preferred application is as power transmission fluids, especially hydraulic oils.

U.S. Patent 4,792,410, Schwind et al., December 20, 1988, discloses a lubricant composition suitable for manual transmission fluids. Example II discloses a manual transmission fluid containing, among other components, 3.0 parts calcium alkyl benzene sulfonate (overbased). Example III includes 3.5 parts calcium sulfur coupled alkyl (C12) phenate overbased to 200 total base number.

PCT publication WO 2000/26328, May 11, 2000, discloses lubricants having overbased metal salts and organic phosphites. The lubricants may be used in manual transmissions. Example 1 discloses a lubricant prepared by blending (with other components) 0.7% of a calcium benzene sulfonate having 53% oil and a total base number of 41.

European Patent Application EP 0 987 311, March 22, 2000, discloses transmission fluid compositions. A composition comprising an oil and (among other components) at least 0.1 percent by weight of an overbased metal salt provides an improved fluid for continuously variable transmissions. It is said that manual transmission fluids (among others) can benefit from incorporation of the components of that invention. Example 5 discloses a mixture of components including 0.3 parts overbased calcium sulfonate, including 0.1 part diluent oil (300 TBN). The suitable overbased materials themselves preferably have a total base number of 50 to 550, more preferably 100 to 450, on an oil free basis.

U.S. Patent 3,652,410, Hollinghurst et al., March 28, 1972, discloses lubricant compositions for a multipurpose lubricating oil that can be used for, among others, transmissions. Examples in Table I contain basic calcium sulfonate total base No. 300.

U.S. Patent 7,238,651, Kocsis et al., July 3, 2007, discloses a process for preparing an overbased detergent and the use of such a detergent in internal combustion engines. An example discloses the preparation of 500 TBN calcium sulfonate. The Total Base Number is described as a measure of the final overbased detergent containing the oil used in processing. Various optional performance additives may also be present.

U.S. Patent Publication 2010-0152080, Tipton et al., June 17, 2010, discloses a lubricant composition exhibiting good dynamic frictional performance. The lubricant composition comprises an oil of lubricating viscosity and an oil-soluble branched-chain hydrocarbyl-substituted arenesulfonic acid salt having at least one hydrocarbyl substituent which is a highly branched group as defined by having a Chi(0)/Shadow XY ratio greater than about 0.180 US 2003/104952 A1 discloses a lubricating composition for manuel transmission with sintered synchronized components. US 5,635,459 A discloses a functional fluid composition.

U.S Publication 2009/0203564, Seddon et al., August 13, 2009, discloses a process for preparing a neutral or an overbased detergent. In certain embodiments, the detergent may have a TBN ranging from 100 to 1300,or from 250 to 920. The overbased detergent is said to be suitable for any lubricant composition; listed lubricants include transmission fluids and gear oils, among others.

The disclosed technology, therefore, solves the problem of balancing friction requirements with anti-wear performance in the synchronizer of a lubricated manual transmission, by a correct selection of an overbased detergent and other components.

### SUMMARY OF THE INVENTION

The disclosed technology provides a method of lubricating a non-metallic surface in the synchronizer of a manual transmission, comprising supplying thereto a lubricant comprising: (a) an oil of lubricating viscosity; and (b) an overbased, carbonated calcium arylsulfonate detergent having a total base number (TBN) of at least about 640 as calculated on an oil-free basis. In certain embodiments, at least one lubricated surface in the synchronizer comprises carbon in the form of fibers, graphitic material (optionally in combination with a cellulosic material), or a cellulosic material, or a phenolic resin.

### DETAILED DESCRIPTION OF THE INVENTION

Various preferred features and embodiments will be described below by way of non-limiting illustration.

The lubricant employed in lubricating the surfaces of a synchronizer of a manual transmission will contain an oil of lubricating viscosity, also referred to as a base oil. The base oil may be selected from any of the base oils in Groups I-V of the American Petroleum Institute (API) Base Oil Interchangeability Guidelines, namely

| Base Oil Category | Sulfur (%) | | Saturates (%) | Viscosity Index |
|---|---|---|---|---|
| Group I | >0.03 | and/or | <90 | 80 to 120 |
| Group II | <0.03 | and | ≥90 | 80 to 120 |
| Group III | <0.03 | and | ≥90 | >120 |
| Group IV | All polyalphaolefins (PAOs) | | | |
| Group V | All others not included in Groups I, II, III or IV | | | |

Groups I, II and III are mineral oil base stocks. The oil of lubricating viscosity can include natural or synthetic oils and mixtures thereof. Mixture of mineral oil and synthetic oils, e.g., polyalphaolefin oils and/or polyester oils, may be used. In certain embodiments the oil employed is a mineral oil base stock and may be one or more of Group I, Group II, and Group III base oils or mixtures thereof. In certain embodiments the oil is not a synthetic oil. In certain embodiments the oil is Group I or Group II or mixtures thereof.

Natural oils include animal oils and vegetable oils (e.g. vegetable acid esters) as well as mineral lubricating oils such as liquid petroleum oils and solvent-treated or acid treated mineral lubricating oils of the paraffinic, naphthenic, or mixed paraffinicnaphthenic types. Hydrotreated or hydrocracked oils are also useful oils of lubricating viscosity. Oils of lubricating viscosity derived from coal or shale are also useful.

Synthetic oils include hydrocarbon oils and halosubstituted hydrocarbon oils such as polymerized and interpolymerized olefins and mixtures thereof, alkylbenzenes, polyphenyl, alkylated diphenyl ethers, and alkylated diphenyl sulfides and their derivatives, analogs and homologues thereof. Alkylene oxide polymers and interpolymers and derivatives thereof, and those where terminal hydroxyl groups have been modified by, e.g., esterification or etherification, are other classes of synthetic lubricating oils. Other suitable synthetic lubricating oils comprise esters of dicarboxylic acids and those made from C₅ to C₁₂ monocarboxylic acids and polyols or polyol ethers. Other synthetic lubricating oils include liquid esters of phosphorus-containing acids, polymeric tetrahydrofurans, siliconbased oils such as poly-alkyl-, polyaryl-, polyalkoxy-, or polyaryloxy-siloxane oils, and silicate oils.

Other synthetic oils include those produced by Fischer-Tropsch reactions, typically hydroisomerized Fischer-Tropsch hydrocarbons or waxes. In one embodiment oils may be prepared by a Fischer-Tropsch gas-to-liquid synthetic procedure as well as other gas-to-liquid oils.

Unrefined, refined and rerefined oils, either natural or synthetic (as well as mixtures thereof) of the types disclosed hereinabove can used. Unrefined oils are those obtained directly from a natural or synthetic source without further purification treatment. Refined oils are similar to the unrefined oils except they have been further treated in one or more purification steps to improve one or more properties. Rerefined oils are obtained by processes similar to those used to obtain refined oils applied to refined oils which have been already used in service. Rerefined oils often are additionally processed to remove spent additives and oil breakdown products.

The amount of the oil of lubricating viscosity present is typically the balance remaining after subtracting from 100 wt % the sum of the amount of the overbased, carbonated calcium arylsulfonate detergent described in greater detail hereinafter and the other performance additives that may be present.

The lubricating composition may be in the form of a concentrate and/or a fully formulated lubricant. If the lubricating composition is in the form of a concentrate which may be combined with additional oil to form, in whole or in part, a finished lubricant), the ratio of the of these additives to the oil of lubricating viscosity and/or to diluent oil include the ranges of 1:99 to 99:1 by weight, or 80:20 to 10:90 by weight.

Another component of the disclosed lubricant is an overbased, carbonated calcium arylsulfonate detergent having a total base number (TBN) of at least 640 as calculated on an oil-free basis, or a mixture of such detergents. Detergents in general are typically overbased materials, otherwise referred to as overbased or superbased salts, which are generally homogeneous Newtonian systems having by a metal content in excess of that which would be present for neutralization according to the stoichiometry of the metal and the detergent anion. The amount of excess metal is commonly expressed in terms of metal ratio, that is, the ratio of the total equivalents of the metal to the equivalents of the acidic organic compound. Overbased materials are prepared by reacting an acidic material (such as carbon dioxide) with an acidic organic compound, an inert reaction medium (e.g., mineral oil), a stoichiometric excess of a metal base, and a promoter such as a phenol or alcohol. The acidic organic material will normally have a sufficient number of carbon atoms, to provide oil-solubility.

Overbased detergents may be characterized by Total Base Number (TBN), the amount of strong acid needed to neutralize all of the material's basicity, expressed as mg KOH per gram of sample. TBN is a very well-known parameter that is described in ASTM D 4739. Since overbased detergents are commonly provided in a form which contains diluent oil, for the purpose of this document, TBN is to be recalculated to an oil-free basis. Various detergents may have a TBN of 100 to 1000, or 150 to 800, or, 400 to 700. The detergents of particular interest for the present technology will have a TBN of at least 640, for instance, 650 to 1000, or even 680 to 800. In each case, the units are mg KOH/g.

While it is required that an overbased calcium sulfonate detergent be present, other metals may also be present, whether in a sulfonate detergent (for example, an overbased magnesium arylsulfonate detergent) or a different detergent substrate (for example, an overbased calcium phenate detergent). The metal compounds generally useful in making the basic metal salts are generally any Group 1 or Group 2 metal compounds (CAS version of the Periodic Table of the Elements). Examples include alkali metals such as sodium, potassium, lithium, copper, magnesium, calcium, barium, zinc, and cadmium. In one embodiment the metals are sodium, magnesium, or calcium. The anionic portion of the salt can be hydroxide, oxide, carbonate, borate, or nitrate. The detergents of particular interest for the present technology will be calcium detergents, typically prepared using calcium oxide or calcium hydroxide. Since the detergents of particular interest are carbonated detergents, they will be materials that have been treated with carbon dioxide. Such treatment leads to more efficient incorporation of basic metal into the composition. Formation of high TBN detergents involving reaction with carbon dioxide is disclosed, for instance, in US 7,238,651, Kocsis et al., July 3, 2007, see, for instance, examples 10-13 and the claims. Other detergents, however, may also optionally be present, which need not be carbonated or need not be so highly overbased (i.e., of lower TBN). However, if multiple detergents are present, it is desirable that the overbased calcium arylsulfonate detergent is present as the predominant amount by weight of the metal detergents, that is, at least 50 weight percent or at least 60 or 70 or 80 or 90 weight percent of the metal-containing detergents, on an oil free basis.

The lubricants useful in the present technology will contain an overbased sulfonate detergent. Suitable sulfonic acids include sulfonic and thiosulfonic acids, including mono- or polynuclear aromatic or cycloaliphatic compounds. Certain oil-soluble sulfonates can be represented by R²-T-(SO₃⁻)ₐ or R³-(SO₃⁻)_{b}, where a and b are each at least one; T is a cyclic nucleus such as benzene or toluene; R² is an aliphatic group such as alkyl, alkenyl, alkoxy, or alkoxyalkyl; (R²)-T typically contains a total of at least 15 carbon atoms; and R³ is an aliphatic hydrocarbyl group typically containing at least 15 carbon atoms. The groups T, R², and R³ can also contain other inorganic or organic substituents; they may also be described as hydrocarbyl groups. In one embodiment the sulfonate detergent may be a predominantly linear alkylbenzenesulfonate detergent as described in paragraphs [0026] to [0037] of US Patent Application 2005-065045. In some embodiments the linear alkyl (or hydrocarbyl) group may be attached to the benzene ring anywhere along the linear chain of the alkyl group, but often in the 2, 3, or 4 position of the linear chain, and in some instances predominantly in the 2 position. In other embodiments, the alkyl (or hydrocarbyl) group may be branched, that is, formed from a branched olefin such as propylene or 1-butene or isobutene. Sulfonate detergents having a mixture of linear and branched alkyl groups may also be used.

In certain embodiments the carbonated calcium arylsulfonate detergent of the disclosed technology may be based on an alkylated and sulfonated benzene; in another embodiment, it may be based on an alkylated and sulfonated toluene. In either case there may be one or two or three, and in certain embodiments one, alkyl (or hydrocarbyl) group attached to the aromatic ring, in addition to the methyl group if toluene is used as the starting aromatic compound. In one embodiment, the detergent is a monoalkylbenzene-monosulfonate, and in another embodiment it is a monoalkyltoluenemonosulfonate. If there is one alkyl group, it may contain a sufficient number of carbon atoms to impart oil-solubility to the detergent, such as at least 8 carbon atoms, or 10 to 100 carbon atoms, or 10 to 50 carbon atoms, or 12 to 36 carbon atoms, or 14 to 24 or 16 to 20 or alternatively about 18 carbon atoms. If more than one alkyl group (other than methyl) is present, each alkyl group may have the afore-described number of carbon atoms, or all the alkyl groups together may have in total the afore-described number of carbon atoms, (e.g., two C12 alkyl groups for a total of 24 carbon atoms in the alkyl groups).

Another type of overbased material that may additionally be present (that is, in addition to the arylsulfonate detergent) in certain embodiments of the present invention is an overbased phenate detergent. Certain commercial grades of calcium sulfonate detergents contain minor amounts of calcium phenate detergents to aid in their processing or for other reasons and may contain, for instance, 4% phenate substrate content and 96% sulfonate substrate content. The phenols useful in making phenate detergents can be represented by (R¹)ₐ-Ar-(OH)_{b}, where R¹ is an aliphatic hydrocarbyl group of 4 to 400 or 6 to 80 or 6 to 30 or 8 to 25 or 8 to 15 carbon atoms; Ar is an aromatic group such as benzene, toluene or naphthalene; a and b are each at least one, the sum of a and b being up to the number of displaceable hydrogens on the aromatic nucleus of Ar, such as 1 to 4 or 1 to 2. There is typically an average of at least 7 or 8 aliphatic carbon atoms provided by the R¹ groups for each phenol compound, and in some instances about 12 carbon atoms. Phenate detergents are also sometimes provided as sulfur-bridged species or as methylene-bridged species. Sulfur-bridged species may be prepared by reacting a hydrocarbyl phenol with sulfur. Methylene-bridged species may be prepared by reacting a hydrocarbyl phenol with formaldehyde (or a reactive equivalent such as paraformaldehyde). Examples include sulfur-bridged dodecylphenol (overbased Ca salt) and methylene-coupled heptylphenol.

In another embodiment, an optional, additional overbased material is an overbased saligenin detergent. Overbased saligenin detergents are commonly overbased magnesium salts which are based on saligenin derivatives. A general example of such a saligenin derivative can be represented by the formula 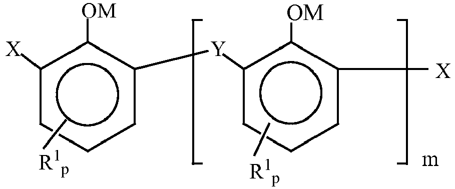 where X is -CHO or -CH₂OH, Y is -CH₂- or -CH₂OCH₂-, and the -CHO groups typically comprise at least 10 mole percent of the X and Y groups; M is hydrogen, ammonium, or a valence of a metal ion (that is, if M is multivalent, one of the valences is satisfied by the illustrated structure and other valences are satisfied by other species such as anions or by another instance of the same structure), R₁ is a hydrocarbyl group of 1 to 60 carbon atoms, m is 0 to typically 10, and each p is independently 0, 1, 2, or 3, provided that at least one aromatic ring contains an R¹ substituent and that the total number of carbon atoms in all R¹ groups is at least 7. When m is 1 or greater, one of the X groups can be hydrogen. In one embodiment, M is a valence (or equivalent) of a Mg ion or a mixture of Mg and hydrogen. Saligenin detergents are disclosed in greater detail in U.S. Patent 6,310,009, with special reference to their methods of synthesis (Column 8 and Example 1) and preferred amounts of the various species of X and Y (Column 6).

Other optional detergents include salixarate detergents. Salixarate detergents are overbased materials that can be represented by a compound comprising at least one unit of formula (I) or formula (II): 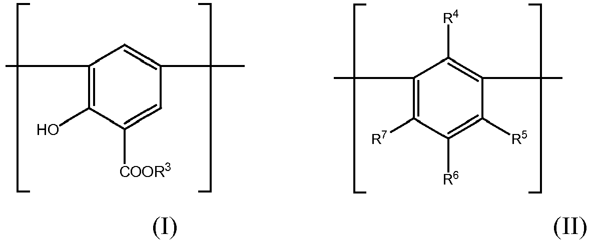 each end of the compound having a terminal group of formula (III) or (IV): 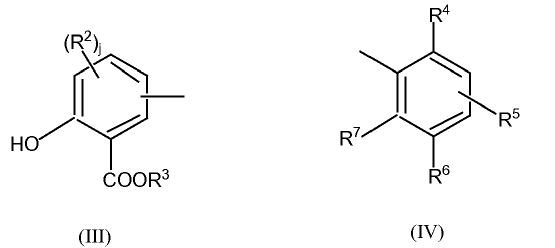 such groups being linked by divalent bridging groups A, which may be the same or different. In formulas (I)-(IV) R³ is hydrogen, a hydrocarbyl group, or a valence of a metal ion; R² is hydroxyl or a hydrocarbyl group, and j is 0, 1, or 2; R⁶ is hydrogen, a hydrocarbyl group, or a hetero-substituted hydrocarbyl group; either R⁴ is hydroxyl and R⁵ and R⁷ are independently either hydrogen, a hydrocarbyl group, or hetero-substituted hydrocarbyl group, or else R⁵ and R⁷ are both hydroxyl and R⁴ is hydrogen, a hydrocarbyl group, or a hetero-substituted hydrocarbyl group; provided that at least one of R⁴, R⁵, R⁶ and R⁷ is hydrocarbyl containing at least 8 carbon atoms; and wherein the molecules on average contain at least one of unit (I) or (III) and at least one of unit (II) or (IV) and the ratio of the total number of units (I) and (III) to the total number of units of (II) and (IV) in the composition is 0.1:1 to 2:1. The divalent bridging group "A," which may be the same or different in each occurrence, includes -CH₂- and -CH₂OCH₂-, either of which may be derived from formaldehyde or a formaldehyde equivalent (e.g., paraform, formalin).

Salixarate derivatives and methods of their preparation are described in greater detail in U.S. patent number 6,200,936 and PCT Publication WO 01/56968. It is believed that the salixarate derivatives have a predominantly linear, rather than macrocyclic, structure, although both structures are intended to be encompassed by the term "salixarate." In one embodiment, a salixarate detergent may contain a portion of molecules represented (prior to neutralization) by the structure 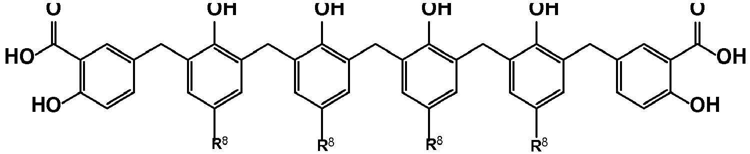 where the R⁸ groups are independently hydrocarbyl groups containing at least 8 carbon atoms.

Glyoxylate detergents are also optional overbased materials. They are based on an anionic group which, in one embodiment, may have the structure 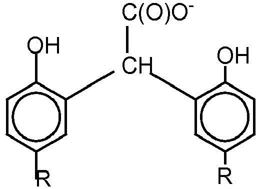 wherein each R is independently an alkyl group containing at least 4 or 8 carbon atoms, provided that the total number of carbon atoms in all such R groups is at least 12 or 16 or 24. Alternatively, each R can be an olefin polymer substituent. The acidic material upon from which the overbased glyoxylate detergent is prepared is the condensation product of a hydroxyaromatic material such as a hydrocarbyl-substituted phenol with a carboxylic reactant such as glyoxylic acid or another omega-oxoalkanoic acid. Overbased glyoxylic detergents and their methods of preparation are disclosed in greater detail in U.S. Patent 6,310,011 and references cited therein.

Another optional overbased detergent is an overbased salicylate, e,g., an alkali metal or alkaline earth metal salt of a substituted salicylic acid. The salicylic acids may be hydrocarbyl-substituted wherein each substituent contains an average of at least 8 carbon atoms per substituent and 1 to 3 substituents per molecule. The substituents can be polyalkene substituents. In one embodiment, the hydrocarbyl substituent group contains 7 to 300 carbon atoms and can be an alkyl group having a molecular weight of 150 to 2000. Overbased salicylate detergents and their methods of preparation are disclosed in U.S. Patents 4,719,023 and 3,372,116.

Other optional overbased detergents can include overbased detergents having a Mannich base structure, as disclosed in U.S. Patent 6,569,818.

In certain embodiments, the hydrocarbyl substituents on hydroxy-substituted aromatic rings in the above detergents (e.g., phenate, saligenin, salixarate, glyoxylate, or salicylate) are free of or substantially free of C₁₂ aliphatic hydrocarbyl groups (e.g., less than 1%, 0.1%, or 0.01% by weight of the substituents are C₁₂ aliphatic hydrocarbyl groups). In some embodiments such hydrocarbyl substituents contain at least 14 or at least 18 carbon atoms.

The amount of the overbased carbonated calcium arylsulfonate detergent in the formulations of the present technology is typically at least 0.1 weight percent, e.g., 0.14 to 4 percent by weight, or 0.2 to 3.5 percent by weight, or 0.5 to 3 percent by weight, or 1 to 2 percent by weight. Alternative amounts include 0.5 to 4 percent, 0.6 to 3.5 percent, 1.0 to 3 percent, or 1.5 to 2.8 %, e.g. at least 1.0 percent. One or a plurality of overbased carbonated calcium arylsulfonate detergents may be present, and if more than one is present, the total amount of such materials may be within the aforementioned percentage ranges. The amount of calcium provided to the lubricant by such materials will depend, of course, on the extent of overbasing of the detergent or detergents, but in some embodiments the amount of calcium provided may be 0.03 to 1.0 percent by weight, or 0.1 to 0.6 percent by weight, or, 0.2 to 0.5 percent by weight.

Any optional, additional detergents may be present in similar amounts. That is, in certain embodiments there may be an overbased phenate detergent present, which may optionally be a calcium phenate and which may optionally be a carbonated detergent, e.g., an overbased carbonated calcium phenate. It may also be a sulfur-bridged material. The amount of such material, if it is present, may be 0 to 4 percent, or 0.05 to 4 percent, 0.1 to 4 percent, or 0.5 to 4 percent, or 1 to 3 percent, or 1.5 to 2.8 percent by weight, or, alternatively 0.05 to 0.1 percent. Likewise, in certain embodiments there may be an overbased magnesium sulfonate detergent present. It may optionally be a carbonated detergent, e.g., an overbased carbonated magnesium arylsulfonate, based on any of the sulfonic acids earlier described. The amount of such material, if it is present, may be 0 to 4 percent, or 0.5 to 4 percent, 0.1 to 4 percent, or 0.5 to 4 percent, or 1 to 3 percent, or 1.5 to 2.8 percent by weight.

As used in this document, expressions such as "represented by the formula" indicate that the formula presented is generally representative of the structure of the chemical in question. However, minor variations can occur, such as positional isomerization. Such variations are intended to be encompassed.

In addition to the oil of lubricating viscosity and the overbased detergent or detergents, the present lubricants will typically include various other additives that may be used in manual transmission fluids. One such material is a phosphorus-containing material that may serve as an antiwear agent or may provide other benefits.

The phosphorus-containing material may include at least one phosphite. In one embodiment, the phosphite is a di-or trihydrocarbyl phosphite, and in one embodiment may be a dialkylphosphite. The phosphite may be present in an amount of 0.05 to 3, or 0.2 to 2, or 0.2 to 1.5, or 0.05 to 1.5, or 0.1 to 1, or 0.2 to 0.7 percent by weight. The hydrocarbyl or alkyl groups may have 1 to 24, or 1 to 18, or 2 to 8 carbon atoms. Each hydrocarbyl group may independently be alkyl, alkenyl, aryl, or mixtures thereof. When the hydrocarbyl group is an aryl group, it will contain at least 6 carbon atoms, e.g., 6 to 18 carbon atoms. Examples of alkyl or alkenyl groups include propyl, butyl, pentyl, hexyl, heptyl octyl, oleyl, linoleyl, and stearyl groups. Examples of aryl groups include phenyl and naphthyl groups and substituted aryl groups such as heptylphenyl groups. Phosphites and their preparation are known, and many phosphites are available commercially. Particularly useful phosphites include dibutyl hydrogen phosphite, dioleyl phosphite, di(C₁₄₋₁₈) phosphite, and triphenyl phosphite. In one embodiment, the phosphorus component is a dialkylphosphite.

Another phosphorus containing material may include a metal salt of a phosphorus acid. Metal salts of the formula

[(R⁸O)(R⁹O)P(=S)-S]ₙ-M

where R⁸ and R⁹ are independently hydrocarbyl groups containing 3 to 30 carbon atoms, are readily obtainable by heating phosphorus pentasulfide (P₂S₅) and an alcohol or phenol to form an O,O-dihydrocarbyl phosphorodithioic acid. The alcohol which reacts to provide the R⁸ and R⁹ groups may be a mixture of alcohols, for instance, a mixture of isopropanol and 4-methyl-2-pentanol, and in some embodiments a mixture of a secondary alcohol and a primary alcohol, such as isopropanol and 2-ethylhexanol. The resulting acid may be reacted with a basic metal compound to form the salt. The metal M, having a valence n, generally is aluminum, tin, manganese, cobalt, nickel, zinc, or copper, and in many cases, zinc, to form zinc dialkyldithiophosphates. Such materials are well known and readily available to those skilled in the art of lubricant formulation. Suitable variations to provide low phosphorus volatility are disclosed, for instance, in US published application 2008-0015129, see, e.g., claims.

Yet another type of a phosphorus antiwear agent may include an amine salt of a phosphorus acid ester. This material can serve as one or more of an extreme pressure agent and a wear preventing agent. The amine salt of a phosphorus acid ester may include phosphoric acid esters and salts thereof; dialkyldithiophosphoric acid esters and salts thereof; phosphites; and phosphorus-containing carboxylic esters, ethers, and amides; and mixtures thereof. The amine salt of the phosphorus acid ester may comprise any of a variety of chemical structures. In particular, a variety of structures are possible when the phosphorus acid ester compound contains one or more sulfur atoms, that is, when the phosphorus-containing acid is a thiophosphorus acid ester, including mono- or dithiophosphorus acid esters. A phosphorus acid ester may be prepared by reacting a phosphorus compound such as phosphorus pentoxide with an alcohol. Suitable alcohols include those containing up to 30 or to 24, or to 12 carbon atoms, including primary or secondary alcohols such as isopropyl, butyl, amyl, sec-amyl, 2-ethylhexyl, hexyl, cyclohexyl, octyl, decyl and oleyl alcohols and mixtures of isomers thereof, as well as any of a variety of commercial alcohol mixtures having, e.g., 8 to 10, 12 to 18, or 18 to 28 carbon atoms. Polyols such as diols may also be used. The amines which may be suitable for use as the amine salt include primary amines, secondary amines, tertiary amines, and mixtures thereof, including amines with at least one hydrocarbyl group, or, in certain embodiments, two or three hydrocarbyl groups having, e.g., 2 to 30 or 8 to 26 or 10 to 20 or 13 to 19 carbon atoms.

In certain embodiments a phosphorus antiwear agent may be present in an amount to deliver 0.01 to 0.2 or 0.015 to 0.15 or 0.02 to 0.1 or 0.025 to 0.08 percent phosphorus to the lubricant.

The lubricant formulation will typically also contain at least one dispersant. Dispersants are well known in the field of lubricants and include primarily what is known as ashless dispersants and polymeric dispersants. Ashless dispersants are so-called because, as supplied, they do not contain metal and thus do not normally contribute to sulfated ash when added to a lubricant. However they may, of course, interact with ambient metals once they are added to a lubricant which includes metal-containing species. Ashless dispersants are characterized by a polar group attached to a relatively high molecular weight hydrocarbon chain. Typical ashless dispersants include N-substituted long chain alkenyl succinimides, having a variety of chemical structures including typically 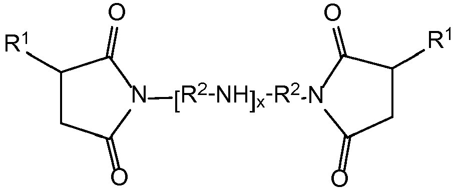 where each R¹ is independently an alkyl group, frequently a polyisobutylene group with a molecular weight (Mₙ) of 500-5000 based on the polyisobutylene precursor, and R² are alkylene groups, commonly ethylene (C₂H₄) groups. Such molecules are commonly derived from reaction of an alkenyl acylating agent with a polyamine, and a wide variety of linkages between the two moieties is possible beside the simple imide structure shown above, including a variety of amides and quaternary ammonium salts. In the above structure, the amine portion is shown as an alkylene polyamine, although other aliphatic and aromatic mono- and polyamines may also be used. Also, a variety of modes of linkage of the R¹ groups onto the imide structure are possible, including various cyclic linkages. The ratio of the carbonyl groups of the acylating agent to the nitrogen atoms of the amine may be 1:0.5 to 1:3, and in other instances 1:1 to 1:2.75 or 1:1.5 to 1:2.5. Succinimide dispersants are more fully described in U.S. Patents 4,234,435 and 3,172,892 and in EP 0355895.

Another class of ashless dispersant is high molecular weight esters. These materials are similar to the above-described succinimides except that they may be seen as having been prepared by reaction of a hydrocarbyl acylating agent and a polyhydric aliphatic alcohol such as glycerol, pentaerythritol, or sorbitol. Such materials are described in more detail in U.S. Patent 3,381,022.

Another class of ashless dispersant is Mannich bases. These are materials which are formed by the condensation of a higher molecular weight, alkyl substituted phenol, an alkylene polyamine, and an aldehyde such as formaldehyde. Such materials may have the general structure 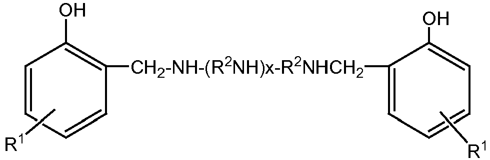 (including a variety of isomers and the like) and are described in more detail in U.S. Patent 3,634,515.

Other dispersants include polymeric dispersant additives, which are generally hydrocarbon-based polymers which contain polar functionality to impart dispersancy characteristics to the polymer.

Dispersants can be and often are post-treated by reaction with any of a variety of agents. Among these are urea, thiourea, dimercaptothiadiazoles, carbon disulfide, aldehydes, ketones, carboxylic acids, hydrocarbon-substituted succinic anhydrides, nitriles, epoxides, boron compounds, and phosphorus compounds. In certain embodiments, a dispersant is used and is a borated dispersant, such as a borated succinimide dispersant. In certain embodiments, the dispersant is post-treated with an acid such as terephthalic acid, thus for instance a terephthalic acid treated succinimide dispersant. In certain embodiments, the dispersant is treated with at least one of a boron compound and terephthalic acid. Dispersants of this type (which may also optionally be further treated with other materials such as a dimercaptothiadiazole) are disclosed in greater detail in U.S. Patent 7,902,130, Baumanis et al, March 8, 2011; see, for instance, Example 1 thereof.

The amount of the dispersant in a fully formulated lubricant of the present technology may be at least 0.1% of the lubricant composition, or at least 0.3% or 0.5% or 1%, and in certain embodiments at most 5% or 4% or 3% or 2% by weight.

Another component that may be present is an antioxidant. Antioxidants encompass phenolic antioxidants, which may comprise a butyl substituted phenol containing 2 or 3 t-butyl groups. The para position may also be occupied by a hydrocarbyl group, an estercontaining group, or a group bridging two aromatic rings. Antioxidants also include aromatic amine, such as nonylated diphenylamines, phenyl-α-naphthylamine ("PANA"), or alkylated phenylnaphthylamine. Other antioxidants include sulfurized olefins, titanium compounds, and molybdenum compounds. U.S. Pat. No. 4,285,822, for instance, discloses lubricating oil compositions containing a molybdenum and sulfur containing composition. U.S. Patent Application Publication 2006-0217271 discloses a variety of titanium compounds, including titanium alkoxides and titanated dispersants, which materials may also impart improvements in deposit control and filterability. Other titanium compounds include titanium carboxylates such as neodecanoate. Typical amounts of antioxidants will, of course, depend on the specific antioxidant and its individual effectiveness, but illustrative total amounts can be 0.01 to 5 percent by weight or 0.15 to 4.5 percent or 0.2 to 4 percent. Additionally, more than one antioxidant may be present, and certain combinations of these can be synergistic in their combined overall effect.

Viscosity improvers (also sometimes referred to as viscosity index improvers or viscosity modifiers) may be included in the compositions of this technology. Viscosity improvers are usually polymers, including polyisobutenes, polymethacrylic acid esters, diene polymers, polyalkylstyrenes, esterified styrene-maleic anhydride copolymers, alkenylarene-conjugated diene copolymers, and polyolefins. Multifunctional viscosity improvers, which also have dispersant and/or antioxidancy properties are known and may optionally be used.

Another additive is an antiwear agent, in addition to those described above. Examples of anti-wear agents include phosphorus-containing antiwear/extreme pressure agents such as metal thiophosphates, phosphoric acid esters and salts thereof, phosphorus-containing carboxylic acids, esters, ethers, and amides; and phosphites. Non-phosphorus-containing anti-wear agents include borate esters (including borated epoxides), dithiocarbamate compounds, molybdenum-containing compounds, and sulfurized olefins.

Other materials that may be used as antiwear agents include tartrate esters, tartramides, and tartrimides. Examples include oleyl tartrimide (the imide formed from oleylamine and tartaric acid) and oleyl or other alkyl diesters (from, e.g., mixed C12-16 alcohols). Other related materials that may be useful include esters, amides, and imides of other hydroxy-carboxylic acids in general, including hydroxy-polycarboxylic acids, for instance, acids such as tartaric acid, citric acid, lactic acid, glycolic acid, hydroxy-propionic acid, hydroxyglutaric acid, and mixtures thereof. These materials may also be used in formulations that contain phosphorus compounds, e.g., low-phosphorus oils. These materials may also impart additional functionality to a lubricant beyond antiwear performance. They are described in greater detail in US Publication 2006-0079413 and PCT publication WO2010/077630. Such derivatives of (or compounds derived from) a hydroxy-carboxylic acid, if present, may typically be present in the lubricating composition in an amount of 0.1 weight % to 5 weight %, or 0.2 weight % to 3 weight %, or greater than 0.2 weight % to 3 weight %.

Other additives that may optionally be used in lubricating oils include pour point depressing agents, extreme pressure agents, anti-wear agents, color stabilizers, and antifoam agents.

The lubricant formulations described herein are effective for lubricating manual transmissions having synchronizers with a component made from a wide variety of non-metals and therefore having at least one surface made from such materials. Among the materials that may be used are carbon fibers, graphitic carbon materials, cellulosic materials, which may be typically present as a part of a composite in a resinous matrix, and phenolic resins. In certain embodiments the non-metallic material may be present on the surface of another substrate material, which may be resinous, cellulosic, or metallic, or combinations thereof. In some embodiments the non-metallic surface may be of a thickness of at least 1 micrometer, such as, greater than a few (up to 100) atoms in thickness. In some embodiments a synchronizer surface may be of a non-metallic substance in which particles of metal may be embedded; such materials may be considered to be non-metallic for purposes of the present technology. In a synchronizer, one mating component (typically, the gear cone) is made of steel and the other component or surface (typically, the synchronizer ring) is made of, or has a surface of, one of the foregoing materials. Another surface which may optionally also be present may include a metallic material such as solid brass, sintered brass, bronze (including solid bronze and sintered bronze), molybdenum, and aluminum.

The amount of each chemical component described herein is presented exclusive of any solvent or diluent oil, which may be customarily present in the commercial material, that is, on an active chemical basis, unless otherwise indicated. However, unless otherwise indicated, each chemical or composition referred to herein should be interpreted as being a commercial grade material which may contain the isomers, by-products, derivatives, and other such materials which are normally understood to be present in the commercial grade.

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include:
hydrocarbon substituents, that is, aliphatic (e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form a ring);
substituted hydrocarbon substituents, that is, substituents containing non-hydrocarbon groups which, in the context of this invention, do not alter the predominantly hydrocarbon nature of the substituent (e.g., halo (especially chloro and fluoro), hydroxy, alkoxy, mercapto, alkylmercapto, nitro, nitroso, and sulfoxy);
hetero substituents, that is, substituents which, while having a predominantly hydrocarbon character, in the context of this invention, contain other than carbon in a ring or chain otherwise composed of carbon atoms and encompass substituents as pyridyl, furyl, thienyl and imidazolyl. Heteroatoms include sulfur, oxygen, and nitrogen. In general, no more than two, or no more than one, non-hydrocarbon substituent will be present for every ten carbon atoms in the hydrocarbyl group; alternatively, there may be no non-hydrocarbon substituents in the hydrocarbyl group.

It is known that some of the materials described above may interact in the final formulation, so that the components of the final formulation may be different from those that are initially added. For instance, metal ions (of, e.g., a detergent) can migrate to other acidic or anionic sites of other molecules. The products formed thereby, including the products formed upon employing the composition of the present invention in its intended use, may not be susceptible of easy description. Nevertheless, all such modifications and reaction products are included within the scope of the present invention; the present invention encompasses the composition prepared by admixing the components described above.

### EXAMPLES

Formulations are prepared and tested in a synchronizer test rig in a "durability test." This is a screening test that is customarily used to evaluate wear as well as friction and durability characteristic of a clutch synchronizer. The test rig typically does not simulate a full engagement of the synchronizer components, but does measure the friction between the synchronizer ring and the gear cone. The rig comprises a test rig bath in which the components are assembled.

An Automax® rig comprises a test rig bath in which the components are assembled. The synchronizer is attached to the test rig key on one side of the chamber and the cone assembled onto a test rig jig on the other side. The test conditions used are shown in the Table below. The fluids are maintained at 80 °C with the synchronizer typically rotating at 1000 rpm. In each test, there is an initial break-in phase of 100 cycles of engagement. Thereafter, multiple cycles of engagement consist of 0.2 seconds of contact followed by 5 seconds of separation, running at 1000 r.p.m. at 80 °C and a load during contact of 981 N (100 kg).

| | | |
|---|---|---|
| Oil Temperature | (°C) | 80 |
| Speed | (rpm) | 1000 |
| Load | (kg) | 100 |
| | (N) | 980.6 |
| On Time | (sec) | 0.2 |
| Off Time | (sec) | 5.0 |
| Inertia | (kg cm sec2) | 2.67 |
| Calculated Torque | (Nm) | 41 |

In this work, three synchronizer types are used for testing. The key features of these synchronizers are summarized in the table below. All parts are OEM production parts used in standard vehicles:

| | Phenolic Synchronizer | Carbon Composite Synchronizer 1 | Carbon Composite Synchronizer 2 |
|---|---|---|---|
| Gear Cone Angle (degrees) | 7.0 | 7.0 | 6.5 |
| Land Width (mm) | 11.60 | 10.02 | 11.30 |
| Effective radius (mm) | 62.0 | 78.5 | 59.5 |
| Composition | phenolic resin | carbon composite | carbon composite |

The wear performance provided by the lubricant is important. Wear may be determined from the test rig and testing profile described above, by measuring of mg weight loss from the synchronizer ring at the end of the testing.

Base Formulation 1. A first series of tests is run in a baseline formulation as follows. The amounts shown are oil-free, percentages by weight:
Detergent - amount and identity as described below
Succinimide dispersant, borated - 1.12%
Aromatic amine antioxidant - 0.5%
Bis(hydrocarbyldithio)thiadiazole - 0.2%
Dibutyl phosphite - 0.2%
Polyalphaolefin, 100 cSt - 8%
Polyalphaolefin synthetic base oil, 4 cSt - balance to = 100%

In the first series of tests three detergents are investigated and are present in amounts which will provide approximately the same amounts of anionic substrate (that is, about the same weight percent of sulfonate moiety, despite varying amounts of diluent oil and base (CaCO3 or other species). For the series of Example 1, the detergent is a high TBN calcium sulfonate detergent, 690 TBN (oil free), in an amount of 2.76 percent (oil free). For the series of Example 2 (comparative or reference examples), the detergent is a low TBN (substantially neutral) calcium sulfonate detergent, 30 TBN (oil free), in an amount of 0.86 percent. For the series of Example 3 (comparative or reference examples), the detergent is a high TBN magnesium sulfonate detergent, 590 TBN (oil free) in an amount of 2.38 percent. The results of wear testing are shown in the following table:

| | Ex 1: 690 TBN Ca detergent | Ex. 2*: 30 TBN Ca detergent | Ex. 3*: 590 TBN Mg detergent |
|---|---|---|---|
| Amount of detergent (oil-free) | 2.42% | 0.86% | 2.38% |
| Amount of sulfonate moiety^{a} | 0.83% | 0.82% | 0.89% |
| Amount of metal (Ca or Mg)^{a} | 0.67% | 0.04% | 0.33% |
| (A) Phenolic resin synchronizer ring | | | |
| Wear, mg | 13.1 | 16.0 | 23.1 |
| (B) Carbon composite synchronizer ring 1 | | | |
| Wear, mg | 28.6 | 34.3 | 47.0 |

| | | | |
|---|---|---|---|
| * A reference or comparative example a Calculated, weight % | | | |

Base formulation 2. A second series of tests is run in a baseline formulation as follows. The amounts shown are oil-free, percentages by weight:
Detergent - 1% (including diluent oil) - identity as described below
Succinimide dispersant, borated - 1.97%
Aromatic amine antioxidant - 0.5%
Bis(hydrocarbyldithio)thiadiazole - 0.3%
Dibutyl phosphite - 0.3%
Polyalphaolefin, 100 cSt - 8%
Polyalphaolefin synthetic base oil, 4 cSt - balance to = 100%

In the second series of tests three detergents are investigated and are present in amounts which are nominally the same, 1.0% as provided (including sulfonate moiety, base, and oil). For the series of Example 4, the detergent is a high TBN calcium sulfonate detergent, 690 TBN (oil free), in an amount of 1.0 percent, including diluent oil, or 0.58% active chemical (i.e., oil-free basis). For the series of Example 5 (comparative or reference examples), the detergent is a medium-high TBN calcium sulfonate detergent, 600 TBN (oil free), in an amount of 1.0 percent, including diluent oil, or 0.50% active chemical. For the series of Example 6 (comparative or reference examples), the detergent is a high TBN magnesium sulfonate detergent, 590 TBN (oil free) in an amount of 1.0 percent, including diluent oil, or 0.68% active chemical. The results of wear testing are shown in the following table:

| | Ex 4: 690 TBN Ca detergent | Ex. 5*: 600 TBN Ca detergent | Ex. 6*: 590 TBN Mg detergent |
|---|---|---|---|
| Amount of detergent (oil-free) | 0.58% | 0.50% | 0.68% |
| Amount of sulfonate moiety^{a} | 0.20% | 0.28% | 0.25% |
| Amount of metal (Ca or Mg)^{a} | 0.16% | 0.12% | 0.09% |
| (A) Phenolic resin synchronizer ring | | | |
| Wear, mg | 27.1 | 36.5 | 63.6 |
| (B) Carbon composite synchronizer ring 1 | | | |
| Wear, mg | 19.7, 62.4^{b} | 68.4 | 83.5 |
| (C) Carbon composite synchronizer ring 2 | | | |
| Wear, mg | 17.1 | 49.7 | 40.6 |

| | | | |
|---|---|---|---|
| * A reference or comparative example a Calculated, weight % b Duplicate runs. One additional run gave a value of 196.3, which is believed to be in error. | | | |

The results show that the formulations of the present technology consistently provide low wear. In addition, they can provide stable frictional performance and good shift performance.

The mention of any document is not an admission that such document qualifies as prior art or constitutes the general knowledge of the skilled person in any jurisdiction. Except in the Examples, or where otherwise explicitly indicated, all numerical quantities in this description specifying amounts of materials, reaction conditions, molecular weights, number of carbon atoms, and the like, are to be understood as modified by the word "about." It is to be understood that the upper and lower amount, range, and ratio limits set forth herein may be independently combined. Similarly, the ranges and amounts for each element of the invention can be used together with ranges or amounts for any of the other elements. As used herein, the expression "consisting essentially of" permits the inclusion of substances that do not materially affect the basic and novel characteristics of the composition under consideration.

## Claims

1. A method of lubricating a non-metallic surface in the synchronizer of a manual transmission, comprising supplying thereto a lubricant comprising:
(a) an oil of lubricating viscosity; and
(b) an overbased, carbonated calcium arylsulfonate detergent having a total base number (TBN) of at least 640 as measured by ASTM D 4739 and calculated
on an oil-free basis, wherein the amount of the
overbased, carbonated calcium arylsulfonate detergent in the lubricant is 0.14 percent to 4 percent by weight.

2. The method of claim 1 wherein at least one lubricated surface in said synchronizer comprises carbon fibers, a graphitic carbon material, or a phenolic resin.

3. The method of claim 1 or claim 2 wherein at least one lubricated surface in said synchronizer comprises carbon fibers or a graphitic carbon material.

4. The method of any of claims 1 through 3 wherein the carbonated calcium aryl-sulfonate detergent has a TBN of 650 to 1000.

5. The method of any of claims 1 through 4 wherein the arylsulfonate detergent comprises an alkylarylsulfonate anion in which the alkyl group is linear.

6. The method of any of claims 1 through 4 wherein the arylsulfonate detergent comprises an alkylarylsulfonate anion in which the alkyl group is branched.

7. The method of any of claims 1 through 6 wherein the arylsulfonate detergent comprises an alkylarylsulfonate anion in which the alkyl group contains 12 to 36 carbon atoms.

8. The method of any of claims 1 through 7 wherein the arylsulfonate is an alkyl-substituted benzenesulfonate or an alkyl-substituted toluenesulfonate.

9. The method of any of claims 1 through 8 wherein the amount of calcium in the lubricant is 0.03 to 1.0 weight percent.

10. The method of any of claims 1 through 9 wherein the amount of the overbased, carbonated calcium arylsulfonate detergent in the lubricant is 0.14 to 3 percent by weight.

11. The method of any of claims 1 through 10 wherein the lubricant further comprises an overbasedphenate detergent.

12. The method of any of claims 1 through 11 wherein the lubricant further comprises an overbased magnesium sulfonate.

13. The method of any of claims 1 through 12 wherein the lubricant further comprises a dialkylphosphite.

14. The method of any of claims 1 through 13 wherein the lubricant further comprises a succinimide dispersant which has been treated with at least one of a borating agent and terephthalic acid.

## Patentansprüche

1. Verfahren zum Schmieren einer nichtmetallischen Oberfläche im Synchronisator eines Handschaltgetriebes, bei dem man dieser ein Schmiermittel, umfassend:
(a) ein Öl mit Schmierviskosität und
(b) ein überalkalisiertes, carbonatisiertes Calciumarylsulfonat-Detergens mit einer gemäß ASTM D 4739 gemessenen und auf ölfreier Basis berechneten Gesamtbasenzahl (Total Base Number, TBN) von mindestens 640, wobei die Menge des überalkalisierten, carbonatisierten Calciumarylsulfonat-Detergens in dem Schmiermittel 0,14 Gewichtsprozent bis 4 Gewichtsprozent beträgt, zuführt.

2. Verfahren nach Anspruch 1, bei dem mindestens eine geschmierte Oberfläche in dem Synchronisator Kohlefasern, ein graphitisches Kohlenstoffmaterial oder ein Phenolharz umfasst.

3. Verfahren nach Anspruch 1 oder Anspruch 2, bei dem mindestens eine geschmierte Oberfläche in dem Synchronisator Kohlefasern oder ein graphitisches Kohlenstoffmaterial umfasst.

4. Verfahren nach einem der Ansprüche 1 bis 3, bei dem das carbonatisierte Calciumarylsulfonat-Detergens eine TBN von 650 bis 1000 aufweist.

5. Verfahren nach einem der Ansprüche 1 bis 4, bei dem das Arylsulfonat-Detergens ein Alkylarylsulfonat-Anion mit linearer Alkylgruppe umfasst.

6. Verfahren nach einem der Ansprüche 1 bis 4, bei dem das Arylsulfonat-Detergens ein Alkylarylsulfonat-Anion mit verzweigter Alkylgruppe umfasst.

7. Verfahren nach einem der Ansprüche 1 bis 6, bei dem das Arylsulfonat-Detergens ein Alkylarylsulfonat-Anion mit 12 bis 36 Kohlenstoffatomen in der Alkylgruppe umfasst.

8. Verfahren nach einem der Ansprüche 1 bis 7, bei dem es sich bei dem Arylsulfonat um ein alkylsubstituiertes Benzolsulfonat oder ein alkylsubstituiertes Toluol sulfonat handelt.

9. Verfahren nach einem der Ansprüche 1 bis 8, bei dem die Calciummenge in dem Schmiermittel 0,03 bis 1,0 Gewichtsprozent beträgt.

10. Verfahren nach einem der Ansprüche 1 bis 9, bei dem die Menge des überalkalisierten, carbonatisierten Calciumarylsulfonat-Detergens in dem Schmiermittel 0,14 bis 3 Gewichtsprozent beträgt.

11. Verfahren nach einem der Ansprüche 1 bis 10, bei dem das Schmiermittel ferner ein überalkalisiertes Phenat-Detergens umfasst.

12. Verfahren nach einem der Ansprüche 1 bis 11, bei dem das Schmiermittel ferner ein überalkalisiertes Magnesiumsulfonat umfasst.

13. Verfahren nach einem der Ansprüche 1 bis 12, bei dem das Schmiermittel ferner ein Dialkylphosphit umfasst.

14. Verfahren nach einem der Ansprüche 1 bis 13, bei dem das Schmiermittel ferner ein Succinimid-Dispergiermittel, das mit einem Borierungsmittel und/oder Terephthalsäure behandelt worden ist, umfasst.

## Revendications

1. Procédé de lubrification d'une surface non métallique dans le synchroniseur d'une transmission manuelle, comprenant le fait d'y amener un lubrifiant comprenant :
(a) une huile ayant une viscosité de lubrification ; et
(b) un détergent sur-baséifié de type arylsulfonate de calcium carboné ayant un indice de basicité totale (IBT) d'au moins 640, mesuré par la méthode ASTM D 4739 et calculé sans prendre l'huile en compte, la quantité du détergent sur-baséifié de type arylsulfonate de calcium carboné dans le lubrifiant étant de 0,14 % à 4 % en poids.

2. Procédé selon la revendication 1, dans lequel au moins une surface lubrifiée dans ledit synchroniseur comprend des fibres de carbone, un matériau de type carbone graphitique, ou une résine phénolique.

3. Procédé selon la revendication 1 ou la revendication 2, dans lequel au moins une surface lubrifiée dans ledit synchroniseur comprend des fibres de carbone ou un matériau de type carbone graphitique.

4. Procédé selon l'une quelconque des revendications 1 à 3, dans lequel le détergent de type arylsulfonate de calcium carboné a un IBT de 650 à 1 000.

5. Procédé selon l'une quelconque des revendications 1 à 4, dans lequel le détergent de type arylsulfonate comprend un anion alkylarylsulfonate dans lequel le groupe alkyle est linéaire.

6. Procédé selon l'une quelconque des revendications 1 à 4, dans lequel le détergent de type arylsulfonate comprend un anion alkylarylsulfonate dans lequel le groupe alkyle est ramifié.

7. Procédé selon l'une quelconque des revendications 1 à 6, dans lequel le détergent de type arylsulfonate comprend un anion alkylarylsulfonate dans lequel le groupe alkyle contient 12 à 36 atomes de carbone.

8. Procédé selon l'une quelconque des revendications 1 à 7, dans lequel l'arylsulfonate est un benzènesulfonate à substitution alkyle ou un toluènesulfonate à substitution alkyle.

9. Procédé selon l'une quelconque des revendications 1 à 8, dans lequel la quantité de calcium dans le lubrifiant est de 0,03 à 1,0 % en poids.

10. Procédé selon l'une quelconque des revendications 1 à 9, dans lequel la quantité du détergent sur-baséifié de type arylsulfonate de calcium carboné dans le lubrifiant est de 0,14 à 3 % en poids.

11. Procédé selon l'une quelconque des revendications 1 à 10, dans lequel le lubrifiant comprend en outre un détergent sur-baséifié de type phénate.

12. Procédé selon l'une quelconque des revendications 1 à 11, dans lequel le lubrifiant comprend en outre un sulfonate de magnésium sur-baséifié.

13. Procédé selon l'une quelconque des revendications 1 à 12, dans lequel le lubrifiant comprend en outre un dialkylphosphite.

14. Procédé selon l'une quelconque des revendications 1 à 13, dans lequel le lubrifiant comprend en outre un dispersant succinimide qui a été traité avec au moins l'un d'un agent de borication et de l'acide téréphtalique.
